# EUROPÄISCHE PATENTANMELDUNG

(11) **EP 3 173 458 A1**
(43) Veröffentlichungstag der Anmeldung: **31.05.2017**
(21) Anmeldenummer: 15196927.6
(22) Anmeldetag: 30.11.2015
(51) Int. Cl.: C10B 27/06, C10B 3/02, C10B 47/06, C10B 53/07

(54) **ANLAGE ZUR TROCKENEN ALTGUMMIPYROLYSE**

(71) Anmelder: Solovyov, Alexander, 2030 Erd (HU)
(72) Erfinder: Dr. SOLOVYOV, Alexander, 2030 Erd (HU); SHEMIGON, Michail, 1195 Budapest (HU)
(74) Vertreter: Jeck, Anton

(57) **Zusammenfassung**

Beschrieben wird eine Anlage zur trockenen Pyrolyse von Altgummi die sich dadurch auszeichnet, dass die Anlage mehrere miteinander verbundene Einzelkassetten aufweist, dass jede Kassette ein separates Gehäuse mit einem Reaktor, einem Brennerraum und einem Unterbrennerraum aufweist, dass im Unterbrennerraum Brenner eingebaut sind, deren Brennleistung je nach verfahrenstechnischen Vorgaben geregelt werden kann, und dass Pyrolysedampfabflussstutzen vorgesehen sind, die mit Dreiwegehähnen versehen sind, um Dampf beim Ausblasen des Reaktors abzulassen, und mit Hilfe einer Leitung direkt mit einem Wärmetauscher verbunden sind.

## Beschreibung

Die vorliegende Erfindung bezieht sich auf die chemische Industrie und insbesondere auf das Recycling nach dem Pyrolyseverfahren, insbesondere dem trockenen Pyrolysieren. Sie betrifft die Altreifenpyrolyse sowie die Pyrolyse von sonstigen Altgummierzeugnissen, wie Luftschläuchen, Schläuchen und Ähnlichem.

Aus dem Stand der Technik ist eine Pyrolyseanlage für festes Kohlenwasserstoffgut bekannt. Diese Pyrolyseanlage enthält mindestens drei Zellen, die sich in einem ausgekleideten Gehäuse befinden und voneinander durch ausgekleidete Trennwände getrennt sind. Aus Metall gefertigte Reaktoren befinden sich in den ausgekleideten Reaktorzellen. Jeder der Reaktoren ist oben mit einem nicht ausgekleideten Metalldeckel geschlossen. Der Deckel liegt höher als die jeweilige ausgekleidete Reaktorzelle. Jede der Reaktorzellen ist mit Brennern ausgestattet. Die Metallreaktoren sind mit einem Wärmetauscher verbunden (UA 28131, IPC C10J3/00, Veröffentlichungsdatum 16.10.2000).

Diese bekannte Anlage hat folgende Mängel. Da der Deckel nicht ausgekleidet ist, kommt der Pyrolysedampf nach oben, kondensiert auf dem kalten Deckel (nach dem gleichen Prinzip wird auf dem Lande Schnaps hausgebrannt) und fließt wieder in die Reaktorzelle zurück. Hier wird die Flüssigkeit wiederum erwärmt, verdampft und geht erneut ins Kondensat über. Das heißt, es kommt ein wiederkehrender Vorgang zustande, wobei unnötige Wärmeenergie verbraucht wird und die Gesamtleistung sinkt.

Die Altreifen werden zwecks weiterer Bearbeitung in einen Korb geladen. Nach Abschluss der Pyrolyse fällt ein beachtlicher Anteil an Kohlenstoffresten auf den Reaktorboden herab. Hier sammeln sich die Reste allmählich an und verhindern letztendlich das Einfahren des Korbs in den Reaktor. Darüber hinaus wirken die Kohlenstoffreste als Wärmeschutzschicht und isolieren den Reaktor von der Brennerflamme. Dadurch sinkt die Reaktortemperatur.

Die Altreifen werden zum Recycling aufeinander gestapelt. Das führt dazu, dass die äußere Reifenseite überhitzt wird, während die Temperatur innerhalb des Reifenstapels wesentlich niedriger ist (die Wärmefeldmessungen im Ofen zeigen einen Temperaturunterschied bis zu 100 Grad). Aufgrund dieses Effekts muss die erforderliche Behandlungsdauer verlängert werden, und die Anlagenleistung im Allgemeinen geht herunter.

Darüber hinaus soll bei diesem Verfahren normalerweise eine Hub- und Transporttechnik angewendet werden.

Aus dem Stand der Technik ist ferner eine Altreifen-Recyclinganlage der Fa. OOO ECOPROMSERVICE bekannt (manager@eco-promservice.ru).

Die Altreifenentsorgung und das -recycling verlaufen in mehreren Schritten. Die recycelbaren Altreifen werden auf dem Rohstofflager gesammelt. Eine Entwulstmaschine entwulstet die Reifen und trennt die Wülste und die Profilteile voneinander, damit das Behandlungsgut dichter gefüllt werden kann. Eine Retorte wird mit dem Recyclinggut gefüllt, mit einem Deckel abgedeckt und in einen Pyrolyseofen gesetzt. Hier wird das Recyclinggut auf 450°C erhitzt. Nach Abschluss des Pyrolysevorgangs wird die Retorte dem Ofen entnommen, und eine nächste befüllte Retorte wird eingesetzt. Nach der erfolgten Pyrolyse bleiben Pyrokohlenstoff und Stahldraht-Kord in der Retorte zurück. Nach der Abkühlung der Retorte wird diese entladen, und der Stahldraht-Kord wird vom Pyrokohlenstoff getrennt.

Trotz der scheinbar einfachen Prozessgestaltung ist es aus folgenden Gründen im Prinzip nicht möglich, eine hohe Anlageleistung und abgezielte Vorgaben für die resultierenden Stoffe zu erreichen. Da nämlich die Retorte zwecks einer dichteren Füllung mit geschnittenen Reifen gefüllt wird, kann ein gleichmäßiges Wärmefeld aufgrund der niedrigen Wärmeleitfähigkeit von Gummi nicht erreicht werden. Folglich wird in Randgebieten des Recyclingguts eine für die Pyrolyse benötigte Solltemperatur erreicht, während die Temperatur in der Mitte wesentlich kleiner ist, und es kommt keine Pyrolyse zustande. Dies kann mit dem Schmelzen eines Eisstücks in einem Glas mit Flüssigkeit verglichen werden. Je größer das Eisstück ist, desto länger schmilzt es. Es handelt sich also um eine schichtweise und keine räumliche Pyrolyse. Folglich kann nicht mit einer hohen Anlagenleistung gerechnet werden.

Die stehende Anordnung der Retorte setzt voraus, dass eine ziemlich hohe Halle und eine passende Krantechnik benutzt werden, sowie dass unbedingt ein Kranarbeiter eingesetzt und anwesend sein muss.

Um die Altreifen zu entwulsten, braucht man eine energieintensive Ausrüstung sowie einen separaten Produktionsbereich mit Bedienungspersonal. Darüber hinaus muss es einen Be- und einen Entladebereich geben. Aus der Beschreibung ist jedoch nicht entnehmbar, wie die Luftableitung aus der Retorte realisiert wird (www.ntds.ru/statyi/116 piroliz pokrishek.pdf).

Aus dem Stand der Technik ist weiterhin eine Anlage der Fa. BRASCO zur trockenen Altreifenpyrolyse bekannt. Sie besteht aus einer Wärmebehandlungszelle, die an ihren Stirnseiten mit Schleusen versehen ist. Die Altreifen werden in 100 - 300 mm große Stücke geschnitten und auf einen Transportwagen geladen. Der Transportwagen wird mittels eines Kettenförderers aus einer Schleusenzelle in die Wärmebehandlungszelle bewegt. Die Wärmebehandlungszelle und die Schleusen sind mit Sperrvorrichtungen ausgerüstet. Ein anderer Transportwagen für Abfälle befindet sich zu diesem Zeitpunkt in einer anderen Schleusenzelle im Ent- und Belade- sowie im Standbyzustand. Von einem Dampferzeuger über einen Dampfüberhitzer wird der Wärmebehandlungszelle der auf eine Temperatur von 600 - 650°C überhitzte Wasserdampf zugeführt. Der Wasserdampfumlauf durch eine Abfallschicht wird mit Hilfe eines Lüfters hergestellt. Die entstehenden gasförmigen thermischen Abbauprodukte der Abfälle werden in ein System zur Abkühlung und Trennung in flüssige und gasförmige Anteile abgeleitet. Nach Abschluss des thermischen Abfallabbauvorgangs wird der Transportwagen mit einem festen Rückstand aus der Wärmebehandlungszelle zurück in die Schleusenzelle ausgefahren und auf eine Temperatur von 100 - 120°C gekühlt. Nach der Kühlung wird der feste Anteil auf einen Auslaufförderer ausgeschüttet, indem der Transportwagenboden geschwenkt wird. Anschließend wird der Feststoffanteil über eine Förderstrecke einem Abscheidungsmodul zugeführt.

Diese Anlage hat folgende Hauptmängel. Die Ausstattung der Anlage mit Schleusen und Kettenförderern ist trotz aller verfahrenstechnischen Attraktivität sowohl fertigungs- und bau- als auch betriebsmäßig äußerst schwer realisierbar. Aus der Beschreibung geht nicht klar hervor, wie die Wärmebehandlungszelle von den Schleusen und die Schleusen von der Umgebung abgedichtet werden sollen, wenn sie noch mit dem Kettenförderer verbunden werden. Die vorhandenen Schleusen können in keiner Weise verhindern, dass die Luft in die Wärmebehandlungszelle eintritt. Wird die Sperrvorrichtung geöffnet, so tritt die in der Schleuse vorhandene Luft in die Wärmebehandlungszelle ein und vermengt sich mit dem Pyrolysegas, wobei ein explosives Gemisch entsteht (solche Explosionsunfälle sind aus der Praxis bekannt). Ein ähnlicher Vorgang wird auch beim Ausfahren des Transportwagens aus der Wärmebehandlungszelle in die Entladeschleuse beobachtet, denn hier ist auch Luft anwesend.

Um die Pyrolyse durchzuführen, braucht man einen Dampferzeuger und einen Dampfüberhitzer. Allein das setzt einen hohen Energieverbrauch voraus. Durch die vorhandenen Rohrleitungen entstehen auch unnötige Wärmeverluste. Bei einer Temperatur zwischen 600 und 650°C steht der Dampfüberhitzer unter einem Druck von mind. 35 atm. Folglich muss der Dampfüberhitzer von einem Bediener stets überwacht werden. Die gesamte Anlage ist eine erhöhte Gefahrenquelle.

Der Pyrolysevorgang bedarf eines hohen Dampfverbrauchs bis zu 500 kg/Stunde. Dabei müssen Aufbereitungsanlagen eingesetzt werden, um das Kondensat zu entwässern und das Wasser zu entölen. Die gesamte Konstruktion der Anlage ist platzraubend, denn aufgrund der vorhandenen Schleusen nimmt die Wärmebehandlungszelle (Arbeitsraum) nur ein Drittel ein, der Rest entfällt auf die Schleusen. Die Zerschneidung der Altreifen bedarf einer energieaufwändigen Ausrüstung und eines entsprechenden Bedienungspersonals.

Der nächstkommende Stand der Technik gegenüber der Erfindung verfahrensmäßig und dem technischen Wesen nach ist eine Anlage zur trockenen Altgummipyrolyse, die für Kunststofferzeugnisse, wie Altreifen, Reifendecken und Räder, geeignet ist (UA 60972 C10J3/00 25.06.2011). Die Anlage besteht aus einer ausgekleideten Zelle mit mehreren metallenen Reaktoren, wobei jeder der Reaktoren eine Füllöffnung mit einer Klappe und einen Auslaufstutzen aufweist, einer Sammelleitung, mindestens einer Wärmeträgerzufuhreinrichtung, um den Wärmeträger den Reaktoren zuzuführen, einem Wärmetauscher und einem Gasbehälter. Die Auslaufstutzen sind an die Sammelleitung angeschlossen. Der Wärmetauscher ist mit der Sammelleitung verbunden. Der Eintritt des Gasbehälters ist mit dem Wärmetauscher und der Austritt mit der Wärmeträgerzufuhreinrichtung für die Reaktoren verbunden. Die Abmessungen des Reaktors sind so ausgelegt, dass die Anlage stehend aufgestellt ist. Die Füllöffnungen mit Klappe befinden sich an der Stirnseite der Anlage. Die Wärmeträgerzufuhreinrichtung für die Reaktoren ist so ausgebildet, dass eine Frontanordnung der Flamme möglich ist. Dank der stehenden Unterbringung der Erzeugnisse ermöglicht die bekannte Anlage, ein gleichmäßiges Wärmefeld über den gesamten Reaktorraum zu erhalten. Dadurch werden nicht nur nichtausreagierte Rückstände vermieden, sondern auch der gesamte Vorgang wird sicher geführt.

Der Betrieb dieser bekannten Anlage unter Produktionsbedingungen hat trotz der erreichten Hochleistung folgende wesentliche baumäßige Mängel gezeigt. Da die Reaktoren in der gemeinsamen Zelle eingebaut sind, ist es nicht möglich, den Wärmebetrieb des jeweiligen Reaktors individuell zu regeln, denn bei jeder Ausrichtung des Wärmeträgers beeinflusst dieser nicht nur den gewünschten Reaktor sondern auch seinen Nachbarreaktor. Der Betrieb hat deutlich gezeigt, dass es nicht möglich ist, einen strikt geregelten Betrieb für einen konkreten Reaktor zu erreichen. Der Wärmeverbrauch des Reaktors ist sofort nach der Füllung ziemlich hoch, während der Pyrolyse geht er zurück. Das heißt, dass der Gasverbrauch reduziert werden sollte, sonst wird die Solltemperatur überschritten. Gleichzeitig sollte der Nachbarreaktor erhitzt und die Wärmelast erhöht werden. Somit entsteht eine Zwickmühle.

Ein Teil des Pyrolysegases kondensiert in der vorhandenen Sammelleitung und vermindert somit den Dampfdurchflussquerschnitt. Dadurch wird ein Durchflusswiderstand verursacht. Folglich sollte die Sammelleitung regelmäßig gereinigt werden. Beim Dampfausblasen und bei der Entlüftung des Reaktors vor seinem Anlauf sollte die Klappe ein wenig geöffnet bleiben, damit der Dampf austreten kann. Aus sicherheitstechnischen Gründen ist das aber verboten, denn der überhitzte Dampf kann Verbrennungen beim Bedienpersonal verursachen. Der Einsatz eines Gasbehälters als Speicher (ohne Gaseinspeisung unter Druck) wird sinnlos, aber wenn die Anlage gestartet und mit Kohlendioxid gespült wird, nimmt der Gasverbrauch um die Größe des Gasbehälters zu. Wird das Gassystem mit Pyrolysegas gefüllt, so steigen seine Verluste um die gleiche Größe an. Die Verwendung eines gemeinsamen Gehäuses macht die bauliche Umgestaltung einer konkreten Anlage unmöglich.

Der vorliegenden Erfindung liegt die Aufgabe zugrunde, eine solche Anlage zur insbesonderen trockenen Altgummipyrolyse (unter Altgummi wird dabei ein beliebiges Recyclinggut aus Gummi, wie Altreifen, verstanden) zu entwickeln, die es infolge bestimmter Konstruktionsänderungen ermöglicht, im Ganzen solche Bedingungen zu erreichen, dass jeder der Reaktoren nach seinen strikt festgelegten Vorgaben betrieben werden kann. Die Erfindung soll ferner die Produktionsleistung steigern, die Kondensation und die Verwachsung der Rohrleitungen vermeiden und den gefährdungsfreien Betrieb der gesamten Anlage sicherstellen.

Die gestellte Aufgabe wird mit Hilfe der vorliegenden Anlage zur insbesondere trockenen Altgummipyrolyse gelöst.

Beim Altgummi handelt es sich um Recyclinggut z.B. vom Typ Altreifen. Die beanspruchte Anlage umfasst mehrere miteinander verbundene Einzelkassetten, d.h. die Einzelkassetten sind konstruktionsmäßig miteinander verbunden, wobei sie jeweils ein einzelnes Gehäuse mit einem Reaktor, einem Brenner- und einem Unterbrennerraum aufweisen. Im Unterbrennerraum sind Brenner eingebaut, deren Brennleistung je nach verfahrenstechnischen Vorgaben geregelt werden kann. Ferner sind Pyrolysedampfabflussstutzen vorgesehen, die mit Dreiwegehähnen versehen sind, um den Dampf beim Ausblasen des Reaktors abzulassen. Die Pyrolysedampfabflussstutzen sind über eine Leitung, insbesondere eine flexible Leitung, vorzugsweise einen Metallschlauch, direkt mit einem Wärmetauscher verbunden.

Das Pyrolysegas wird mittels eines aufgestellten Verdichters in einen Gasbehälter unter Druck eingepumpt und von dort aus über ein Gasdruckreduzierventil den Brennern zugeführt.

Die Anlage umfasst, wie vorstehend beschrieben wurde, Einzelkassetten. Die Anlage kann mit einer beliebigen Kassettenanzahl bestückt sein. Dabei kann die Anlage je nach Bedarf sowohl mit allen Kassetten als auch mit nur einigen Einzelkassetten betrieben werden.

Jede Kassette ist mit einem separaten Brenner ausgestattet, der eine präzise Prozessführung gemäß der Vorgaben ermöglicht. Damit ist es möglich, die Prozessführung für jede Kassette individuell zu gestalten.

Die in den Pyrolysedampfabflussstutzen zur Ableitung des Pyrolysedampfs an den Wärmetauscher eingebauten Dreiwegehähne sorgen dafür, dass der Betrieb der Anlage bei geöffneten Türen völlig ausgeschlossen ist. Folglich wird die Verbrennungsgefahr durch überhitzten Dampf vermieden. Darüber hinaus ist die Explosionsgefahr ausgeschlossen, weil Luft in den Reaktor mit eventuell darin enthaltenen Pyrolysedämpfen nicht eintreten kann.

Vorzugsweise sind Türen in den Reaktoren vorgesehen, die den Reaktor insbesondere stirnseitig verschließen. Ferner kann in der Anlage der Wärmetauscher mit einem Tropfenfänger verbunden sein. Weiterhin kann die Anlage Gasbehälter aufweisen, in die Gas mit Hilfe eines Verdichters eingepumpt werden kann. Die vorstehend beschriebene Leitung kann ein Metallschlauch sein, der insbesondere flexibel ausgebildet ist. Schließlich können in den Türen der Reaktoren Wasserdüsen vorgesehen sein.

Beispielsweise kann die Anlage zur trockenen Pyrolyse von Altgummi vom Typ Altreifen umfassen ein Gehäuse, Reaktoren, Türen, die stirnseitig den Reaktor schließen, Brenner zur Erhitzung des Reaktors, Pyrolysedampfabflussstutzen, mindestens einen Absperrhahn, einen Wärmetauscher, einen Tropfenfänger und einen Gasbehälter, wobei die Altreifen in Vertikalstellung geladen werden können und wobei das Gas in den Gasbehälter mit Hilfe eines Verdichters eingepumpt wird, wobei sich die Anlage dadurch auszeichnet, dass die Anlage einen Satz konstruktionsmäßig miteinander verbundener Einzelkassetten aufweist, dass jede Kassette ein separates Gehäuse mit einem Reaktor, einen Brennerraum und einen Unterbrennerraum aufweist, dass im Unterbrennerraum die Brenner eingebaut sind, deren Brennleistung je nach verfahrenstechnischen Vorgaben geregelt ist und dass die Pyrolysedampfabflussstutzen mit Dreiwegehähnen versehen sind, um den Dampf beim Ausblasen des Reaktors abzulassen, und mit Hilfe eines Metallschlauchs direkt mit einem Wärmetauscher verbunden sind.

Der Verdichter und der Gasbehälter sind für den Betrieb unter Druck ausgelegt. Folglich kann die Anlage bei einem stabilen Gasdruck des den Brennern zugeführten Gases arbeiten. Das Gasdruckreduzierventil ermöglicht, beliebige Brennertypen anzuwenden (Nieder-, Mittel- und Hochdruckbrenner).

Weiterhin hat die Erfindung ein Verfahren zur insbesondere trockenen Pyrolyse von Altgummi zum Gegenstand, wobei die erfindungsgemäße Anlage verwendet wird. Zur Durchführung der Pyrolyse wird der zu pyrolysierende Altgummi in den Reaktor eingebracht und dann pyrolysiert.

Die Anlage wird nun anhand der beigefügten Zeichnungen näher beispielhaft beschrieben, ohne sie darauf einzuschränken. Es zeigen:
- Fig. 1: eine Seitenansicht einer Kassette im Schnitt und
- Fig. 2: eine Vorderansicht der Kassette der Fig. 1.

Die Anlage 1 umfasst mehrere Einzelkassetten 2, die außen mit einer Verkleidung (Gehäuse) 3 geschlossen sind. Die Kassette 2 weisen einen Reaktor 4 auf, der mit einem Reifen 20 beladen und mit einer Tür 22 dicht geschlossen wird. Um den Reaktor 4 zu erhitzen, ist die Kassette 2 mit einem Brennerraum 5 versehen. Die Konstruktion des Brennerraums 5 stellt eine gleichmäßige Erhitzung des Reaktors sicher. Ein Unterbrennerraum 6 schafft Bedingungen für die Flammenbildung des Brenners 7.

Das infolge der Erhitzung entstehende Pyrolysegas wird über einen Pyrolysedampfabflussstutzen 8 abgeleitet, welcher mit einem Dreiwegehahn 9 versehen ist. Dank dem eingebauten Dreiwegehahn 9 kann der Reaktor mit Dampf bei geschlossenen Türen ausgeblasen werden. Erstens wird dadurch eine Luftansaugung im Reaktor und folglich eine Explosionsgefahr vermieden, und zweitens ist das Bedienungspersonal durch eventuelle Verbrennungen mit dem überhitzten Dampf nicht gefährdet.

Ein Pyrolysedampfabflussstutzen 8 ist mit einem Wärmetauscher 11 mit Hilfe eines Metallschlauchs 10 verbunden. Die Anwendung des Metallschlauchs 10 verhindert die Schwingungs- und Stoßübertragung zwischen der Anlage 1 und dem Wärmetauscher 11 vollständig. Dadurch ist die Möglichkeit ausgeschlossen, dass das System undicht wird. Darüber hinaus vereinfacht das Vorhandensein eines flexiblen Metallschlauchs 10 wesentlich die Montagearbeiten beim Anschluss des Reaktors 4 an den Wärmetauscher 11.

Der Wärmetauscher 11 ist mit einem Tropfenfänger 12 verbunden, in dem die Flüssigkeitsreste kondensieren. Folglich wird das trockene Pyrolysegas über eine Rohrleitung 13 in einen Gasbehälter 15 abgeleitet. Das Gas wird in den Gasbehälter 15 mit Hilfe eines Verdichters 14 unter Druck eingepumpt, für den der Gasbehälter 15 ausgelegt ist. Der Gasbehälter 15 ist mit einem Gasdruckreduzierventil 16 versehen. Diese Lösung ermöglicht es, für verschiedene Drücke ausgelegte Brennertypen einzusetzen.

Aus dem Gasbehälter 15 fließt das Gas über eine Gasableitung 17 in eine Sammelleitung und wird den Brennern über eine Gaszuführung 18 zugeführt. Dieses System stellt einen unabhängigen Brennerbetrieb und eine individuelle Temperaturregelung im Reaktor sicher.

Über einen Schlauch 19 wird Wasser einer Düse zugeführt. Der Einbau einer Wasserdüse in den Türen sorgt für eine gleichmäßige Verteilung des Wasserstrahls über die gesamte Reaktortiefe und ermöglicht somit eine gleichmäßige Versorgung des gesamten Reaktorraums mit Dampf.

Vor dem Betrieb der Anlage 1 sollte sie auf einwandfreien Zustand und einwandfreie Betriebsbereitschaft geprüft werden. Unter anderem ist Folgendes zu prüfen: die Funktionsfähigkeit der Wasserpumpe, die für die Wasserversorgung der Düsen zuständig ist, die Wasserbereitstellung, die Intaktheit des Türschlosses und der Dichtung, die Intaktheit der Verkleidung 3, die Funktionsfähigkeit der Dreiwegehähne 9 des Verdichters und die Funktionsfähigkeit der Reaktoren 4 und der Kassetten 2, die bei Bedarf gereinigt werden müssen.

Nach der Prüfung der Betriebsbereitschaft der Anlage werden die Brenner 7 gezündet. Die Dreiwegehähne werden auf den Ablass ins Freie umgestellt.

Ein Beispiel des erfindungsgemäßen Pyrolyseverfahrens wird nachfolgend beschrieben.

Nachdem die Solltemperatur (400 - 500° C) erreicht ist, öffnet die Tür 22 des Reaktors 4. Der Reifen 20 wird eingesetzt. Die Tür 22 wird sofort geschlossen und mit Hilfe eines Schlosses abgedichtet. Nachdem die Tür 22 dicht geschlossen ist, wird das Wasser 19 der Düse 21 im Laufe von 3 - 5 s zugeführt. Der gebildete Wasserdampf entlüftet den Reaktor 4. Der Dampf tritt über den Dreiwegehahn 9 ins Freie aus. Sobald der Dampfdruck gesunken ist, wird der Dreiwegehahn 9 in die Stellung für den Wärmetauscher 11 umgestellt. Während der Erhitzung des Reifens setzt sich der Pyrolysedampf frei, der über einen Stutzen 8 und einen Metallschlauch 10 in den Wärmetauscher fließt, während das Gas zum Tropfenfänger 12 gelangt. Vom Tropfenfänger wird das Gas über die Rohrleitung 13 in einen Gasbehälter 15 mit Hilfe eines Verdichters 14 eingepumpt. Der Gasbehälter 15 ist mit einem Gasdruckreduzierventil 16, einer Gasableitung 17 und einer Gaszuführung 18 für die Brenner versehen.

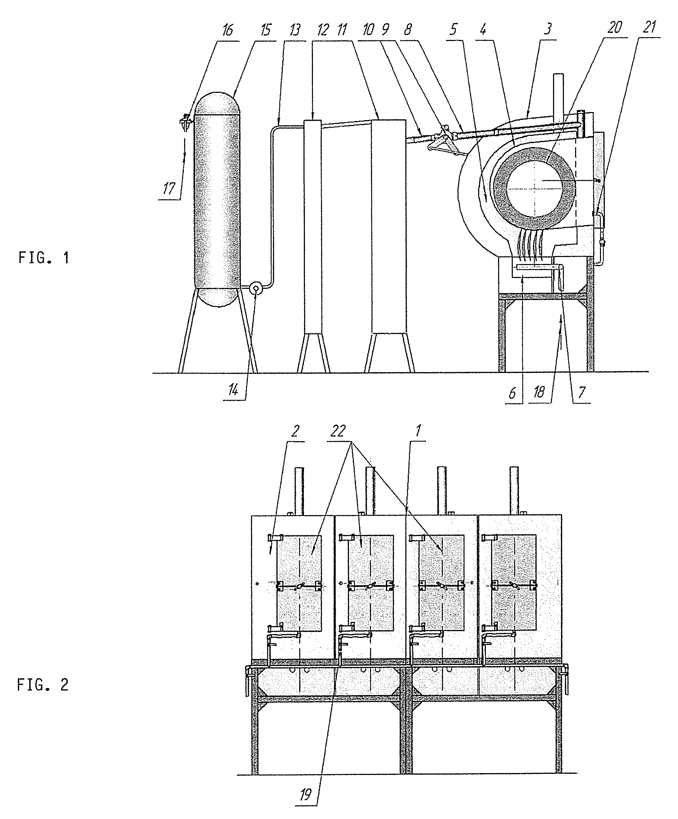

Die übrigen Kassetten werden ähnlich beladen. Die Temperatur im Reaktor wird in üblicher Weise, beispielsweise mit einem Thermoelement THA (TXA) oder THK (TXK) (in Fig. 1 nicht abgebildet) gemessen und mittels Gasverbrauchs des Brenners 7 geregelt.

Aufgrund der richtigen Flammenbildung im Unterbrennerraum 6 sowie der gleichmäßigen Erhitzung des Reaktors 4 im Brennerraum 5 arbeitet der Reaktor 4 ohne jegliche lokale Überhitzungen. Folglich ist das Gehäuse des Reaktors 4 keinem Verzug ausgesetzt, und der Pyrolysevorgang verläuft genau nach den verfahrenstechnischen Vorgaben.

Nach Abschluss des Pyrolysevorgangs (40 - 60 min je nach der Prozesstemperatur) wird dem Reaktor 3 - 8 Sekunden lang Wasser zugeführt. Der Dampf verdrängt das Pyrolysegas in den Wärmetauscher 11. Danach wird der Dreiwegehahn auf Ableitung ins Freie umgestellt. Die Tür wird geöffnet, der feste Rückstand wird entnommen, und der Reifen wird gemäß des oben beschriebenen Ablaufs eingesetzt.

Nach Betriebsende der Anlage wird das Beladen der Reaktoren der Reihe nach eingestellt. Die Türen werden geschlossen. Die Dreiwegehähne werden auf die Ableitung ins Freie umgestellt.

Die Anlage stellt eine hohe Produktionsleistung sicher, denn sie arbeitet genau nach den jeweiligen technischen Vorgaben. Es wird keine Unterheizung zugelassen. Dabei wird die minimale Hauptprozessdauer erreicht. Die Zusammensetzung der Pyrolyseprodukte entspricht genau den Vorgaben, die durch das jeweilige Pyrolyseverfahren festgelegt sind.

Erstens verhindert die relativ langsame Erhitzung den Verzug des Reaktors 4. Zweitens - und das ist das Wichtigste - wird dabei eine Depolymerisation von Kautschuk mit teilweisem Kohlenwasserstoff-Cracking und der Sublimation des flüssigen Anteils ohne seinen sekundären Abbau (Zersetzung) sichergestellt.

Die Pyrolyseprodukte sind heizwertreich. Bei maximaler Ausbeute hat der flüssige Anteil einen Heizwert zwischen 30 und 40 MJ und ist aschenarm.

## Patentansprüche

1. Anlage (1) zur trockenen Pyrolyse von Altgummi
**dadurch gekennzeichnet,**
**dass** die Anlage mehrere miteinander verbundene Einzelkassetten (2) aufweist,
**dass** jede Kassette (2) ein separates Gehäuse (3) mit einem Reaktor (4), einem Brennerraum (5) und einem Unterbrennerraum (6) aufweist,
**dass** im Unterbrennerraum (6) Brenner (7) eingebaut sind, deren Brennleistung je nach verfahrenstechnischen Vorgaben geregelt werden kann, und
**dass** Pyrolysedampfabflussstutzen (8) vorgesehen sind, die mit Dreiwegehähnen (9) versehen sind, um Dampf beim Ausblasen des Reaktors (4) abzulassen, und mit Hilfe einer Leitung direkt mit einem Wärmetauscher (11) verbunden sind.

2. Anlage nach Anspruch 1, wobei Türen (22) vorgesehen sind, die den Reaktor verschließen.

3. Anlage nach Anspruch 1 oder 2, wobei der Wärmetauscher (11) mit Tropfenfänger (12) verbunden ist.

4. Anlage nach einem der vorhergehenden Ansprüche, wobei sie Gasbehälter (15) aufweist, in die Gas mit Hilfe eines Verdichters (14) eingepumpt werden kann.

5. Anlage nach einem der vorhergehenden Ansprüche wobei die Leitung ein Metallschlauch (10) ist.

6. Anlage nach einem der Ansprüche 2 bis 5, wobei in den Türen (22) Wasserdüsen vorgesehen sind.

7. Verfahren zur Pyrolyse von Altgummi unter Verwendung der Vorrichtung nach einem der Ansprüche 1 bis 6, wobei der zu pyrolysierende Altgummi in den Reaktor eingebracht und darin pyrolysiert wird.
